# EUROPÄISCHE PATENTSCHRIFT

(11) **EP 2 746 348 B1**
(45) Veröffentlichungstag und Bekanntmachung des Hinweises auf die Patenterteilung: **21.10.2015**
(21) Anmeldenummer: 13005771.4
(22) Anmeldetag: 11.12.2013
(51) Int. Cl.: C09D 9/00, C08J 5/00, C08L 1/02, C08L 1/26

(54) **Cellulose- und Celluloseether-Lösungen und deren Verwendung**
Cellulosic and cellulose ether solutions and their use
Solutions de cellulose et d'éther de cellulose et leur utilisation

(30) Priorität: 18.12.2012 DE 102012024727
(43) Veröffentlichungstag der Anmeldung: 25.06.2014
(73) Patentinhaber: SE Tylose GmbH & Co.KG, 65203 Wiesbaden (DE)
(72) Erfinder: Kleinert, Mike, D-55130 Mainz (DE); Heinze, Thomas, D-07743 Jena (DE); Liebert, Tim, D-07743 Jena (DE); Kostag, Marc, D-07743 Jena (DE)
(74) Vertreter: Plate, Jürgen

(56) Entgegenhaltungen:
- EP-A1- 2 098 539
- EP-A2- 0 903 381
- GB-A- 2 151 632
- KR-A- 20090 005 423
- US-A- 3 355 385
- MARC KOSTAG ET AL: "Efficient Cellulose Solvent: Quaternary Ammonium Chlorides", MACROMOLECULAR RAPID COMMUNICATIONS, Bd. 34, Nr. 19, 1. Oktober 2013 (2013-10-01), Seiten 1580-1584, XP055105749, ISSN: 1022-1336, DOI: 10.1002/marc.201300497
- S. KÖHLER; T. LIEBERT; T. HEINZE: "Ammonium-based Cellulose Solvents Suitable for Homogeneous Etherification", MACROMOL. BIOSCI., Bd. 9, 2009, Seiten 836-841, XP002721221,
- JOHN GRÄSVIK ET AL: "Halogen-free ionic liquids and their utilization as cellulose solvents", JOURNAL OF MOLECULAR STRUCTURE, Bd. 1028, 1. November 2012 (2012-11-01), Seiten 156-163, XP055105781, ISSN: 0022-2860, DOI: 10.1016/j.molstruc.2012.06.044

## Beschreibung

Die Erfindung betrifft Lösungen von Cellulose in quartären Tetraalklylammoniumverbindungen, wobei die Lösung zusätzlich weitere organische Lösungsmittel umfassen kann. In der gelösten Form kann die Cellulose chemisch modifiziert werden, beispielsweise kann sie alkyliert oder acyliert und durch Regenerierung aus der Lösung zu Fasern und anderen Formkörpern umgeformt werden.

Cellulose läßt sich nur in relativ wenigen Lösungsmitteln physikalisch (d.h. ohne intermediäre chemische Derivatisierung wie im Viskoseverfahren) lösen. Dazu zählen Alkylpyridiniumsalze (US 1,943,176). Die Alkylpyridiniumsalze zeigen jedoch allgemein einen Schmelzpunkt von mehr als 100 °C. Zudem findet in der Lösung ein signifikanter Abbau der Celluloseketten statt, d.h. der durchschnittliche Polymerisationsgrad (DP) der Cellulose nimmt ab. Das stellt einen Nachteil dieses Verfahrens dar.

In der US 2010/0305249 sind homogene Lösungen von Cellulose in Tetraalkylammonium-alkylphosphaten beschrieben. Die Alkylgruppen können gleich oder verschieden sein. Es handelt sich bevorzugt jeweils um geradkettige oder verzweigte (C1-C5)Alkylgruppen oder (C2-C20)Alkoxygruppen. Besonders bevorzugte Tetraalkylammonium-alkylphosphate sind Tributylmethylammonium-dimethylphosphat, Tributylethylammonium-diethylphosphat, Tripropylmethylammonium-dimethylphosphat und Tripropylethylammonium-diethylphosphat. Als Co-Solventien können die Lösungen protische oder aprotische Solventien oder ionische Flüssigkeiten (die sich von den genannten Tetraalkylammonium-alkylphosphaten unterscheiden) enthalten, wie Hexamethylphosphoramide, N-Methyl-pyrrolidon, Nitromethan, N,N-Dimethylformamid, N,N-Dimethylacetamid, Acetonitril, Sulfolan, Dimethylsulfoxid, aliphatische Carbonsäuren, Amine oder Imidazoliumsalze. Der Anteil der genannten Co-Solventien beträgt allgemein 1 bis 15 Gew.-%, bezogen auf das Gesamtgewicht aller Lösungsmittel. Der Anteil der Cellulose beträgt allgemein etwa 1 bis 40 Gew.-%, bezogen auf das Gesamtgewicht der Lösung. Die Cellulose kann in diesen Lösungen chemisch modifiziert werden, sie kann beispielsweise durch Umsetzung mit Acetanhydrid in Celluloseacetat umgewandelt werden.

In den Cellulose-Lösungen gemäß der US 2012/0041080 A1 sind die gleichen Tetraalkylammonium-alkylphosphate wie in den Lösungen gemäß der US 2010/0305249 enthalten, wobei die Alkylgruppen geradkettige oder verzweigte (C1-C5)Alkylgruppen sind. Alkoxygruppen sind nicht erwähnt. Es können die gleichen Co-Solventien verwendet werden. Der Anteil der Co-Solventien beträgt jedoch 5 bis 90 Gew.-%, bezogen auf das Gesamtgewicht aller Lösungsmittel.

Im Dokument GB 2 151 632 werden Strukturell öhnliche Verbindungen zum selben Zweck offenbart.

Bekannt sind auch Lösungen von Cellulose in einer ionischen Flüssigkeit, deren Kation von einer starken organischen Base, wie 1,1,3,3-Tetramethyl-guanidin, 1,1,2,3,3-Pentamethyl-guanidin, 1,8-Diaza-bicyclo[5.4.0]undec-7-en, 1,2-Dimethyl-1,4,5,6-tetrahydropyrimidin oder Imino-tris(dimethylamino)phosphoran, und deren Anion von einer Brönstedt-Säure, wie Propionsäure, Salzsäure, Methyldihydrogenphosphonat oder Phosphinsäure, abgeleitet ist (WO 2011/161326 A2).

Triethylmethylammoniumformiat als Lösemittel für Cellulose ist ebenfalls bekannt (S. Köhler, T. Liebert, T. Heinze, Ammonium-based Cellulose Solvents Suitable for Homogeneous Etherification, Macromol. Biosci. 9 [2009] 836-841). Es zeigt mit 155 °C jedoch einen relativ hohen Schmelzpunkt, der für viele Umsetzungen an Cellulose nicht akzeptabel ist. Eine Einstellung des Schmelzpunktes war nur durch Zugabe von wässriger Ameisensäure möglich, was die möglichen Reaktionen in diesem System stark eingrenzt. Darüber hinaus kommt es beim Lösen zu Derivatisierung der Cellulose; es bildet sich das Celluloseformiat. Die Cellulosekonzentration in diesen Lösungen liegt bei maximal 10 Gew.-%.

Lösungen von Cellulose in ionischen Flüssigkeiten zeigen allgemein eine sehr hohe Viskosität. Viele ionische Lösemittel für Cellulose weisen zudem einen relativ hohen Schmelzpunkt (deutlich über 100 °C) auf. Bei den zum Lösen erforderlichen Temperaturen wird häufig ein Abbau der Polymerketten der Cellulose beobachtet. Zudem sind ionische Flüssigkeiten relativ teuer und sie lassen sich nur eingeschränkt wiederverwerten. Speziell ionische Flüssigkeiten auf der Basis von Heterocyclen neigen bei homogenen Reaktionen an der Cellulose zu Nebenreaktionen wie Ringöffnung oder nukleophiler Substitution.

Es bestand daher nach wie vor die Aufgabe, Cellulose-Lösungen bereitzustellen, in denen die Cellulose homogen bei relativ niedrigen Temperaturen (weniger als 80 °C) gelöst ist. Die Lösungen sollen eine niedrige Viskosität aufweisen. Zudem soll in den Lösungen kein oder nur ein minimaler Abbau der Celluloseketten stattfinden. Das Lösungsmittel soll sich zurückgewinnen und erneut in den Löseprozeß einsetzen lassen. Es soll zudem preiswert sein.

Überraschenderweise wurde gefunden, dass Cellulose und Celluloseether homogen löslich sind in Triethylheptylammoniumchlorid, Triethyloctylammoniumchlorid, Triethylhexylammoniumacetat, Triethylheptylammoniumacetat, Triethyloctylammoniumacetat, Triethylnonylammoniumacetat und Triethyldecylammoniumacetat. Die Hexyl-, Heptyl-, Octyl-, Nonyl- bzw. Decyl-Gruppe ist dabei bevorzugt geradkettig.

Gegenstand der vorliegenden Erfindung ist demgemäß eine Lösung von Cellulose oder einem Celluloseether, die dadurch gekennzeichnet ist, dass das Lösemittel Triethylheptylammoniumchlorid, Triethyloctylammoniumchlorid, Triethylhexylammoniumacetat, Triethylheptylammoniumacetat, Triethyloctylammoniumacetat, Triethylnonylammoniumacetat und/oder Triethyldecylammoniumacetat umfaßt.

In einer bevorzugten Ausführungsform ist das Triethylheptylammoniumchlorid, Triethyloctylammoniumchlorid, Triethylhexylammoniumacetat, Triethylheptylammoniumacetat, Triethyloctylammoniumacetat, Triethylnonylammoniumacetat und/oder Triethyldecylammoniumacetat gemischt mit einem organischen Lösemittel. Der Anteil des organischen Lösungsmittels beträgt bis zu 70 Gew.-%, bezogen auf das Gesamtgewicht des Lösungsmittelgemischs. Die Mischungen aus quartärem Ammoniumsalz und organischem Lösungsmittel zeigen einen gegenüber den reinen quartären Ammoniumsalzen deutlich verminderten Schmelzpunkt. Mit solchen Mischungen lassen sich auch Celluloselösungen herstellen, die bei Raumtemperatur in flüssiger Form vorliegen. In dem Lösungsmittelgemisch können bis zu 25 Gew.-% an Cellulose gelöst sein, bezogen auf das Gesamtgewicht der Lösung. Das ist deutlich mehr als beispielsweise in einer Viskoselösung enthalten ist (etwa 7 bis 8 Gew.-%).

Das organische Lösemittel ist bevorzugt ein Keton (wie Aceton, Ethylmethylketon, *tert*.-Butyl-methylketon, Acetylaceton, Acetophenon oder Cyclopentanon), ein Ether (beispielsweise eine Dialkylether, wobei die beiden Alkylgruppen identisch oder verschieden sein können, oder Tetrahydrofuran), ein Amid (wie N,N-Dimethyl-acetamid, N,N-Dimethylformamid oder N-Methyl-2-pyrrolidon), ein Sulfoxid (wie Dimethylsulfoxid) oder ein Heteroaromat (wie Pyridin). Es kann auch eine Mischung der genannten Lösemittel verwendet werden. Als besonders geeignetes Lösemittel hat sich überraschenderweise Aceton erwiesen. Der Anteil der organischen Lösemittel beträgt bevorzugt 20 bis 65 Gew.-%, besonders bevorzugt 30 bis 60 Gew.-%, jeweils bezogen auf das Gesamtgewicht aller Lösemittel. Wird der Anteil an Aceton im Lösemittelgemisch über 70 Gew.-% hinaus erhöht, so fällt die Cellulose wieder aus. Dieser Effekt kann in einem Spinnverfahren zur Verfestigung von Cellulosefasern genutzt werden, wenn das Extrudat in ein mit Aceton gefülltes Fällbad geleitet wird. Der besondere Vorteil einer solchen Verfahrensweise liegt darin, dass keine weiteren Lösemittel erforderlich sind. Das erleichtert die Rückgewinnung der quartären Ammoniumsalze wesentlich.

Vorzugsweise enthält die erfindungsgemäße Cellulose(ether)lösung neben quartärem Ammoniumsalz und einem oder mehreren der genannten organischen Lösemittel keine weiteren Lösemittel.

Die Cellulose ist beispielsweise eine mikrokristalline Cellulose. Es kann auch Holzzellstoff oder Baumwoll-Linters verwendet werden. Der durchschnittliche Polymerisationsgrad (DP) der Cellulose liegt bevorzugt im Bereich von 300 bis 2900, besonders bevorzugt von 500 bis 1200.

Die erfindungsgemäße Celluloseether-Lösung enthält bevorzugt nicht-ionische Celluloseether, wie Hydroxyethylcellulose (HEC), Methylhydroxyethylcellulose (MHEC), Hydroxypropylcellulose (HPC) oder Methylhydroxypropylcellulose (MHPC). Bei Methylhydroxyethylcellulosen und Methylhydroxypropylcellulosen beträgt der DS(Me) allgemein 1,0 bis 2,5, bevorzugt 1,2 bis 2,5, besonders bevorzugt 1,4 bis 1,9, der MS (HE bzw. HP) allgemein 0,01 bis 1,0, bevorzugt 0,05 bis 0,8, besonders bevorzugt 0,05 bis 0,6. Bei Hydroxyethylcellulosen und Hydroxypropylcellulosen beträgt der MS(HE bzw. HP) allgemein 1,0 bis 4,0, bevorzugt 1,5 bis 3,3.

Gegenstand der Erfindung ist darüber hinaus ein Verfahren zur Herstellung der Cellulose- bzw. Celluloseetherlösung. Darin hat es sich als zweckmäßig erwiesen, die Cellulose zunächst zu dem Lösemittelgemisch zu geben, die Mischung dann zu erwärmen, bis sich die Cellulose bzw. der Celluloseether gelöst hat, und Mischung anschließend wieder abzukühlen, soweit erforderlich. Die Lösung ist über einen längeren Zeitraum lagerfähig.

Die Cellulose- bzw. Celluloseetherlösung kann als solche verwendet werden, beispielsweise als Paste zum Abbeizen von Farbschichten auf Holz, Metall usw.

Die Lösung kann auch als Reaktionsmedium dienen, in dem die Cellulose bzw. der Celluloseether chemisch verändert wird, in dem er beispielsweise verethert oder verestert wird.

Schließlich kann die Celluloselösung auch zu Cellulose-Formkörpern, beispielsweise zu Cellulosefasern oder Cellulosefolien, verarbeitet werden. Die Formgebung erfolgt beispielsweise durch ein Extrusionsverfahren. Dabei wird das Extrudat in ein Fällbad geleitet, das die Cellulose ausfällt. In dem Fällbad kann beispielsweise der Acetonanteil in dem Extrudat so weit erhöht werden, dass die Cellulose nicht länger in Lösung bleibt. Das Verfahren entspricht dann dem bekannten Lyocell-Verfahren.

Die nachfolgenden Beispiele dienen zur Erläuterung der Erfindung. Prozente sind darin als Gewichtsprozente zu verstehen, soweit nicht anders angegeben oder aus dem Zusammenhang unmittelbar erkennbar. In den Beispielen wurde eine Cellulose eingesetzt, die 2 Stunden lang bei 100 °C im Vakuum getrocknet worden war. Triethylamin und Acetonitril wurden nach Standard-Methoden gereinigt und getrocknet. Das mit Hydroxid beladene stark basische Ionenaustauscherharz (SGA550OH von Purolite) wurde vor der Verwendung mehrmals mit Methanol gewaschen.

### Meßverfahren:

Zur Aufnahme der NMR-Spektren wurden die Proben in CDCl₃ gelöst und in einem Bruker Avance 250 und 400 MHz-Spektrometer vermessen (jeweils 16 Scans für ¹H-NMR-Spektren) bzw. in einem 63 oder 101 MHz-Spektrometer mit bis zu 1024 Scans für ¹³C-NMR-Spektren.

Elementaranalysen wurden mit einem CHNS 932-Analysator (Leco) durchgeführt. Stark hygroskopische Proben wurden in Form der Perchlorate vermessen.

Die Schmelzpunkte der genannten Tetraalkylammoniumchlorid- bzw. -bromid-Salze wurden nach einem Standard-Verfahren bestimmt. Dabei wurden die Proben in eine kleine Glasröhre eingebracht und im Exsikkator 24 Stunden lang über Phosphorpentoxid im Vakuum getrocknet. Die Glasröhren wurden dann verschlossen und die Schmelzpunkte in einem Büchi Melting Point B-545 bestimmt.

Synthesen unter Mikrowellen-Bestrahlung wurden mit einem CEM Mars 5 mit offenem oder geschlossenem Reaktionsgefäß durchgeführt. Die Reaktionsmischung wurde dabei auf die gewählte Temperatur aufgeheizt über einen Zeitraum von 15 min und für die gewünschte Reaktionszeit bei dieser Temperatur gehalten, wobei Mikrowellen mit einer Leistung von 200 W eingestrahlt wurden.

Die Viskosität der Lösemittel und der Polymerlösungen (1 gew.-% ige Lösungen) wurde mit einem Haake-Mars II Kegel-Platte Rheometer bei 20 °C bestimmt. Die Scherraten wurden dabei von 1 bis 1.000 s⁻¹ variiert. Jede Einzelmessung wurde in einem Zyklus mit zunehmender und abnehmender Scherrate 5 Minuten lang gemessen um die Reproduzierbarkeit zu gewährleisten und die Abwesenheit von Thixotropie zu überprüfen. Um die Aufnahme von Feuchtigkeit zu verhindern, wurde ein dünner Film von niedrig-viskosem Silikonöl (η_{20°c} = 9,5 mPa s) um den Rand der Meßzelle gelegt sowie eine mit Stickstoff inertisierte Lösemittelfalle.

### Beispiel 1 Synthese von Triethyloctylammoniumbromid (TEC₈Br) - Typisches Verfahren:

### Verfahren A:

Ein 100 ml-Kolben wurde mit Stickstoff gespült, anschließend wurden 8,84 g (0,087 mol) Triethylamin, 20,33 g (0,105 mol) 1-Bromoctan und 31,04 g Acetonitril in den Kolben gegeben. Die Mischung wurde unter Stickstoff-Schutzgas 48 Stunden lang bei 80 °C gerührt. Die flüchtigen Bestandteile wurden dann unter vermindertem Druck abgezogen. Das Rohprodukt wurde aus einer Ethylacetat/Aceton-Mischung kristallisiert. Erhalten wurden 18,55 g (0,063 mol) Triethyloctylammoniumbromid (weiße hygroskopische Kristalle). Die Ausbeute betrug 72 %, bezogen auf Triethylamin.

### Verfahren B:

In einen 500 ml-Kolben, der mit Stickstoff gespült war, wurden 21,84 g (0,216 mol) Triethylamin, 49,85 g (0,258 mol) 1-Bromoctan und 74,60 g Acetonitril gegeben. Die Mischung wurde in einem Mikrowellen-Ofen über einen Zeitraum von 15 Minuten auf 80 °C erwärmt und dann weitere 6 Stunden bei dieser Temperatur und einer Mikrowellen-Leistung von 200 W gerührt. Die flüchtigen Bestandteile der Reaktionsmischung wurden dann unter vermindertem Druck abgezogen und der Rückstand aus einer Mischung von Ethylacetat/Aceton kristallisiert. Dabei wurden 55,60 g (0,190 mol) Triethyloctylammoniumbromid erhalten. Die Ausbeute betrug 88 %, bezogen auf Triethylamin.
¹H-NMR (300 MHz; CDCl₃ als Lösemittel; δ-Skala; t = Triplett, q = Quartett, m = Multiplett): 3,53 (q, 6H, Ethyl-NC**H**₂-), 3,29 (t, 2H, Octyl-NC**H**₂-), 1,39 (t, 9H, Ethyl-CH₃), 1,27 (m, 10H, Octyl-C**H**₂-), 0,88 (t, 3H, Octyl-C**H**₃);
¹³C-NMR (62,5 MHz; CDCl₃ als Lösemittel; δ-Skala): 57,5 (C1), 53,5 (C1'), 31,6 (C6), 29,1, 29,0 (C4, C5), 26,5 (C3), 22,6 (C7), 22,1 (C2), 14,1 (C8), 8,1 (C2').
Elementaranalyse:
berechnet für C₁₄H₃₂ClNO₄: C: 53,57 %, H: 10,28 %, N: 4,46 %;
gefunden: C: 53,76 %, H: 10,14 %, N: 4,33 %.
Schmelzpunkt: 107 °C
Synthese von Triethyloctylammoniumchlorid (TEC₈Cl) - Typisches Verfahren: Verfahren A:

In einen 500 ml-Kolben, der mit Stickstoff gespült worden war, wurden 28,96 g (0,286 mol) Triethylamin, 55,23 g (0,371 mol) 1-Chloroctan und 78,11 g Acetonitril gefüllt. Die Mischung wurde unter Stickstoff-Atmosphäre 96 Stunden lang bei 80 °C gerührt. Die flüchtigen Bestandteile der Reaktionsmischung wurden dann unter vermindertem Druck abgezogen und der Rückstand mit Heptan und Ethylacetat gewaschen. Erhalten wurden 10,34 g (0,069 mol) Triethyloctylammoniumchlorid (weißes, hygroskopisches Salz). Die Ausbeute betrug 24 %, bezogen auf Triethylamin.

Triethylpropylammoniumchlorid bis Triethylheptylammoniumchlorid (TEC₃Cl, TEC₄Cl, TEC₅Cl, TEC₆Cl und TEC₇Cl) wurden auf analoge Weise hergestellt.

### Verfahren B:

In einen Autoklaven aus rostfreiem Stahl, ausgerüstet mit Magnetrührer und Manometer, der mit Stickstoff gespült war, wurden 36,13 g (0,357 mol) Triethylamin, 46,28 g (0,311 mol) 1-Chloroctan und 81,40 g Acetonitril gefüllt. Der Autoklav wurde verschlossen und mit 25 bar Stickstoff beaufschlagt. Die Mischung wurde dann im Autoklav auf 80 °C erwärmt und 48 Stunden lang gerührt. Danach wurde der Überdruck abgelassen und die flüchtigen Bestandteile der Reaktionsmischung wurden unter vermindertem Druck abgezogen. Das Rohprodukt wurde anschließend mit Heptan und Ethylacetat gewaschen. Erhalten wurden 8,30 g (0,033 mol) Triethyloctylammoniumchlorid (weißes, hygroskopisches Salz). Die Ausbeute betrug 11 %, bezogen auf 1-Chloroctan.

### Verfahren C:

Eine Lösung von 14,11 g (0,048 mol) Triethyloctylammoniumbromid in 480 ml Methanol (= 0,1 molare Lösung) wurde auf eine Ionenaustauscher-Säule, gefüllt mit einem stark basischen Anionenaustauscher-Harz gegeben und mit Methanol eluiert. Nach dem Neutralisieren mit verdünnter Salzsäure und dem Abziehen des Lösemittels verblieben 11,92 g (0,048 mol) Triethyloctylammoniumchlorid (weißes, hygroskopisches Salz). Die Ausbeute betrug 99 %.
¹H-NMR (250 MHz; CDCl₃ als Lösemittel; ö-Skala): 3,48 (q, 6H, Ethyl-N-C**H**₂-), 3,22 (t; 2H, Octyl-N-C**H**₂-), 1,68 (m, 2H, Octyl-C**H**₂-), 1,38 (t, 9H, Ethyl-C**H**₃), 1,26 (m, 10H, Octyl-C**H**₂-), 0,68 (t, 3H, Octyl-C**H**₃);
¹³C-NMR (62,5 MHz; CDCl₃ als Lösemittel; δ-Skala): 57,4 (C1), 53,4 (C1'), 31,6 (C6), 29,1, 29,0 (C4, C5), 26,5 (C3), 22,5 (C7), 22,0 (C2), 14,0 (C8), 8,0 (C2').
Elementaranalyse:
berechnet für C₁₄H₃₂ClNO₄: C: 53,57 %, H: 10,28 %, N: 4,46 %;
gefunden: C: 53,47 %, H: 10,31 %, N: 4,44 %.
Schmelzpunkt: 81 °C

### Synthese von Triethyloctylammoniumacetat (TEC₈Ac) - Typisches Verfahren:

Eine Lösung von 29,35 g (0,1 mol) Triethyloctylammoniumbromid in 1 I Methanol (= 0,1 molare Lösung) wurde auf eine Ionenaustauscher-Säule, gefüllt mit einem stark basischen Anionenaustauscher-Harz gegeben und mit Methanol eluiert. Nach dem Neutralisieren mit Essigsäure und dem Abziehen des Lösemittels verblieben 26,60 g (0,097 mol) Triethyloctylammoniumacetat (gelbe, hygrokopische Flüssigkeit). Die Ausbeute betrug 97 %.
¹H-NMR (250 MHz; CDCl₃ als Lösemittel; δ-Skala): 3,34 (q, 6H, Ethyl-N-C**H**₂-), 3,11 (t; 2H, Octyl-N-C**H**₂-), 1,86 (s, 3H, Acetat-CH₃-), 1,56 (m, 2H, Octyl-C**H**₂-), 1,25 (t, 9H, Ethyl-C**H**₃), 1,17 (m, 10H, Octyl-C**H**₂-), 0,77 (t, 3H, Octyl-C**H**₃);
¹³C-NMR (62,5 MHz; CDCl₃ als Lösemittel; δ-Skala): 176,0 (C=O), 57,1 (C1), 53,0 (C1'), 31,5 (C6), 29,0, 28,9 (C4, C5), 26,3 (C3), 24,1 (C7), 22,4 (C2), 21,3 (Acetat-CH₃), 13,9 (C8), 7,6 (C2').
Elementaranalyse:
berechnet für C₁₄H₃₂ClNO₄: C: 53,57 %, H: 10,28 %, N: 4,46 %;
gefunden: C: 53,50 %, H: 10,33 %, N: 4,41 %.
Schmelzpunkt: flüssig bei Raumtemperatur

Die Schmelzpunkte von weiteren Triethylalkylammoniumchloriden und -bromiden, der Schmelzpunkt von Trimethyloctylammoniumchlorid (TMC₈Cl), von Tripropyloctylammoniumchlorid und -bromid (TMC₈Cl bzw. TMC₈Br) sowie von Tributyloctylammoniumchlorid und -bromid (TBC₈Cl bzw. TBC₈Br) sowie die Löslichkeit von Cellulose, Hydroxyethylcellulose (HEC; MS(HE) = 1,97; H27NG4 der SE Tylose GmbH) und Hydroxypropylcellulose (HPC; MS(HP) = 1,16) in diesen Salzen in Gew.-%, bezogen auf das Gesamtgewicht der Lösung, sind in der nachfolgenden Tabelle 1 zusammengestellt:

**Tabelle 1:**

| Salz | Schmelzpunkt [°C] | Löslichkeit)¹ von Cellulose [Gew.-%] | Löslichkeit)¹ von HEC [Gew.-%] | Löslichkeit)¹ von HPC [Gew.-%] |
|---|---|---|---|---|
| TEC₃Cl | 275)² | - | - | - |
| TEC₄Cl | 211)² | - | - | - |
| TEC₅Cl | 141 | - | - | - |
| TEC₆Cl | 103 | - | - | - |
| TEC₇Cl | 98 | 10 | 7,5 | 7,5 |
| TEC₈Cl | 81 | 15 | 10 | 10 |
| TEC₉Cl | ---)³ | - | - | - |
| TEC₁₀Cl | 65 | - | - | - |
| TEC₁₂Cl | 115 | - | - | - |
| TEC₁₄Cl | ---)³ | - | - | - |
| TEC₁₆Cl | ---)³ | - | - | - |
| TEC₆Br | 104 | - | - | - |
| TEC₇Br | 109 | - | - | - |
| TEC₈Br | 107 | - | - | - |
| TEC₉Br | 105 | - | - | - |
| TEC₁₀Br | 106 | - | - | - |
| TEC₁₂Br | 84 | - | - | - |
| TMC₈Cl | --)³ | - | - | - |
| TPC₈Cl | RT)⁴ | - | - | - |
| TPC₈Br | RT | - | - | - |
| TBC₈Cl | RT | - | - | - |
| TBC₈Br | RT | - | - | - |
| TEC₆Ac | RT | 7,5 | | |
| TEC₇Ac | RT | 7,5 | | |
| TEC₈Ac | RT | 7,5 | | |
| TEC₉Ac | RT | 7,5 | | |
| TEC₁₀Ac | RT | 7,5 | | |

| | | | | |
|---|---|---|---|---|
| )¹: - bedeutet: Cellulose bzw. HEC bzw. HPC wird nicht gelöst oder weniger als 1 Gew.-% wird gelöst )²: Zersetzung )³: nicht ermittelbar )⁴: RT = Raumtemperatur (21 °C), d.h. Salz ist bei RT flüssig | | | | |

### Beispiel 2 Herstellen einer Celluloselösung ohne Zusatz eines organischen Lösemittels - Typisches Verfahren:

In einem 50 ml-Kolben, der mit Stickstoff gespült worden war, wurden 4,5 g TEC₈Cl auf 120 °C erhitzt. In die Schmelze wurden 0,5 g Cellulose gegeben und 30 Minuten bei dieser Temperatur mechanisch gerührt, um eine transluzente Lösung zu erhalten.

### Beispiel 3 Herstellen einer Celluloselösung mit Zusatz eines organischen Lösemittels - Typisches Verfahren:

### Verfahren A:

In einen 50 ml-Kolben, der mit Stickstoff gespült worden war, wurden 5,10 g TEC₈ CI, 0,56 g Cellulose und 1,86 g N,N-Dimethylacetamid gegeben. Die Mischung wurde 2 Stunden bei 60 °C mechanisch gerührt, um eine klare Lösung zu erhalten.

### Verfahren B:

In einen 50 ml-Kolben, der mit Stickstoff gespült worden war, wurden 4,5 g TEC₈ CI, 0,5 g Cellulose und 5 g Aceton gegeben. Die Mischung wurde 3 Stunden bei 60 °C mechanisch gerührt, um eine transluzente Lösung zu erhalten.

### Beispiel 4 Herstellen einer Celluloseetherlösung mit Zusatz eines organischen Lösemittels - Typisches Verfahren:

In einen 50 ml-Kolben, der mit Stickstoff gespült worden war, wurden 2,27 g TEC₈ Cl, 0,11 g Hydroxyethylcellulose (MS(HE) = 1,97; H27NG4 der SE Tylose GmbH) und 2,51 g Aceton gegeben. Die Mischung wurde 3 Stunden bei 50 °C mechanisch gerührt, um eine klare Lösung zu erhalten.

### Beispiel 5 Regeneration von Cellulose aus einer Celluloselösung mit Zusatz eines organischen Lösemittels - Typisches Verfahren:

Zu einer auf 60 °C temperierten Lösung, hergestellt wie in Beispiel 3 Verfahren B, wird langsam Aceton zugetropft. Nach 7,5 g Acetonzugabe beginnt Cellulose auszufallen. Die Fällung ist vollständig bei einer Zugabe von insgesamt 20 g Aceton. Durch anschließendes Entfernen von 20 g Aceton unter vermindertem Druck kann wieder eine transluzente Celluloselösung erhalten werden.

In der nachfolgenden Tabelle 2 ist die Viskosität verschiedener Lösemittel und Lösemittelgemische wie auch die von 1 gew.-%igen Lösungen von Cellulose bzw. Hydroxyethylcellulose in diesen Lösemitteln bzw. Lösemittelgemischen bei einer Meßtemperatur von 20 °C aufgelistet.

**Tabelle 2:**

| | Gewichtsverhältnis | Scherrate γ̇ [s⁻¹] | Viskosität η [mPas] |
|---|---|---|---|
| Aceton | --- | 400 - 1.000 | 0,3 |
| TEC₈Cl/Aceton | 4,5 / 5 | 116,9 | 11,7 |
| TEC₈Cl/Aceton | 4,5 / 5 | 116,9 | 10,3 |
| ®Avicel / Aceton)¹ | 1 / 99 | 400 - 1.000 | 0,4 |
| Avicel / TEC₈Cl / Aceton | 1 / 46,9 / 52,1 | 112,4 | 102,6 |
| Avicel / TEC₈Cl / Aceton | 1 / 46,9 / 52,1 | 112,4 | 90,6 |
| HEC / Aceton)¹ | 1 / 99 | 112,4 | 42,8 |
| HEC / TEC₈Cl / Aceton | 1 / 46,9 / 52,1 | 112,4 | 329,2 |
| HEC / TEC₈Cl / Aceton | 1 / 46,9 / 52,1 | 112,4 | 372,9 |
| HEC / TEC₈Cl / Aceton | 1 / 46,9 / 52,1 | 112,3 | 361,9 |
| HEC / TEC₈Cl / Aceton | 1 / 46,9 / 52,1 | 112,4 | 395,7 |

| | | | |
|---|---|---|---|
| )¹: Es handelt sich hierbei um Suspensionen ®Avicel: Mikrokristalline Cellulose ®Avicel PH-101 von FMC BioPolymer, Philadelphia, USA HEC: Hydroxyethylcellulose 11003/046 von SE Tylose GmbH & Co. KG (MS(HE): 1,09) TEC₈Cl: Triethyloctylammoniumchlorid | | | |

### Beispiel 6 Synthese von Tosylcellulose in Triethyloctylammoniumchlorid:

In einem 50 ml-Kolben, der mit Stickstoff gespült worden war, wurden 2,01 g TEC₈Cl auf 120 °C erhitzt. In die Schmelze wurden 0,25 g Cellulose gegeben und 30 Minuten bei dieser Temperatur mechanisch gerührt, um eine transluzente Lösung zu erhalten. Nach Abkühlen auf Raumtemperatur wurden 0,75 g 4-Toluolsulfonylchlorid in 1,3 ml Pyridin langsam zugetropft und 24 Stunden bei Raumtemperatur gerührt. Die Reaktionslösung wurde in 200 ml Eiswasser gefällt. Der Niederschlag wurde dreimal mit 100 ml Wasser und 100 ml Ethanol gewaschen und anschließend aus Dimethylsulfoxid/Isopropanol umgefällt. Drei Tage Trocknen im Vakuum bei 60 °C ergab 0,37 g Tosylcellulose (98 %, DS_{S} = 0.5, DS_{Cl} = 0.2).
Elementaranalyse:
gefunden: C: 46,58 %, H: 4,91 %, N: 0,00 %, S: 6,63 %, CI: 3,22 %.

## Patentansprüche

1. Lösung von Cellulose oder Celluloseether, **dadurch gekennzeichnet, dass** das Lösemittel Triethylheptylammoniumchlorid, Triethyloctylammoniumchlorid, Triethylhexylammoniumacetat, Triethylheptylammoniumacetat, Triethyloctylammoniumacetat, Triethylnonylammoniumacetat und/oder Triethyldecylammoniumacetat umfaßt.

2. Lösung gemäß Anspruch 1, **dadurch gekennzeichnet, dass** das Lösemittel eine Mischung aus a) Triethylheptylammoniumchlorid, Triethyloctylammoniumchlorid, Triethylhexylammoniumacetat, Triethylheptylammoniumacetat, Triethyloctylammoniumacetat, Triethylnonyammoniumacetat und/oder Triethyldecylammoniumacetat und b) mindestens einem organischen Lösemittel umfaßt, wobei der Anteil des mindestens einen organischen Lösemittels bis zu 70 Gew.-% beträgt, bezogen auf das Gesamtgewicht der Lösemittelmischung.

3. Lösung gemäß Anspruch 1 oder 2, **dadurch gekennzeichnet, dass** das organische Lösemittel ein Keton, ein Ether, ein cyclischer Ether, ein Amid, ein Sulfoxid oder ein Heteroaromat, besonders bevorzugt Aceton, ist.

4. Lösung gemäß einem oder mehreren der Ansprüche 1 bis 3, **dadurch gekennzeichnet, dass** der Anteil des mindestens einen organischen Lösemittels 20 bis 65 Gew.-%, besonders bevorzugt 30 bis 60 Gew.-%, jeweils bezogen auf das Gesamtgewicht aller Lösemittel, beträgt.

5. Lösung gemäß einem oder mehreren der Ansprüche 1 bis 4, **dadurch gekennzeichnet, dass** sie einen nicht-ionischen Celluloseether, bevorzugt Hydroxyethylcellulose (HEC), Methylhydroxyethylcellulose (MHEC), Hydroxypropylcellulose (HPC) oder Methylhydroxypropylcellulose (MHPC) enthält.

6. Verwendung der Lösung von Cellulose oder Celluloseether gemäß einem oder mehreren der Ansprüche 1 bis 5 in Pastenform zum Abbeizen von Farbschichten auf Holz, Metall oder anderen Trägermaterialien.

7. Verwendung der Lösung von Cellulose oder Celluloseether gemäß einem oder mehreren der Ansprüche 1 bis 5 als Reaktionsmedium, in denen die Cellulose oder der Celluloseether chemisch verändert, insbesondere verethert und/oder verestert wird.

8. Verwendung der Lösung von Cellulose oder Celluloseether gemäß einem oder mehreren der Ansprüche 1 bis 5 zur Herstellung von Cellulose-Formkörpern, speziell durch Fällung in einem Überschuss von organischem Lösemittel.

## Claims

1. Solution of cellulose or cellulose ether, **characterized in that** the solvent comprises triethylheptylammonium chloride, triethyloctylammonium chloride, triethylhexylammonium acetate, triethylheptylammonium acetate, triethyloctylammonium acetate, triethylnonylammonium acetate and/or triethyldecylammonium acetate.

2. Solution according to Claim 1, **characterized in that** the solvent comprises a mixture of a) triethylheptylammonium chloride, triethyloctylammonium chloride, triethylhexylammonium acetate, triethylheptylammonium acetate, triethyloctylammonium acetate, triethylnonylammonium acetate and/or triethyldecylammonium acetate and b) at least one organic solvent, wherein the amount of the at least one organic solvent is up to 70 wt%, based on the total weight of the solvent mixture.

3. Solution according to Claim 1 or 2, **characterized in that** the organic solvent is a ketone, an ether, a cyclic ether, an amide, a sulphoxide or a heteroaromatic, more preferably acetone.

4. Solution according to one or more of Claims 1 to 3, **characterized in that** the proportion of the at least one organic solvent is 20 to 65 wt%, more preferably 30 to 60 wt%, each based on the total weight of all solvents.

5. Solution according to one or more of Claims 1 to 4, **characterized in that** it contains a nonionic cellulose ether, preferably hydroxyethylcellulose (HEC), methylhydroxyethylcellulose (MHEC), hydroxypropylcellulose (HPC) or methylhydroxypropylcellulose (MHPC).

6. Use of the solution of cellulose or cellulose ether according to one or more of Claims 1 to 5 in paste form for removing paint layers from wood, metal or other substrates.

7. Use of the solution of cellulose or cellulose ether according to one or more of Claims 1 to 5 as a reaction medium wherein the cellulose or cellulose ether is chemically changed, especially etherified and/or esterified.

8. Use of the solution of cellulose or cellulose ether according to one or more of Claims 1 to 5 in the manufacture of shaped cellulose articles, specifically by coagulation in an excess of organic solvent.

## Revendications

1. Solution de cellulose ou d'éther de cellulose, **caractérisée en ce que** le solvant comprend du chlorure de triéthylheptylammonium, du chlorure de triéthyloctylammonium, de l'acétate de triéthylhexylammonium, de l'acétate de triéthylheptylammonium, de l'acétate de triéthyloctylammonium, de l'acétate de triéthylnonylammonium et/ou de l'acétate de triéthyldécylammonium.

2. Solution selon la revendication 1, **caractérisée en ce que** le solvant comprend un mélange a) de chlorure de triéthylheptylammonium, de chlorure de triéthyloctylammonium, d'acétate de triéthylhexylammonium, d'acétate de triéthylheptylammonium, d'acétate de triéthyloctylammonium, d'acétate de triéthylnonylammonium et/ou d'acétate de triéthyldécylammonium et b) d'au moins un solvant organique, dans laquelle la fraction du au moins un solvant organique atteint jusqu'à 70 % en poids par rapport au poids total du mélange de solvants.

3. Solution selon la revendication 1 ou la revendication 2, **caractérisée en ce que** le solvant organique est une cétone, un éther, un éther cyclique, un amide, un sulfoxyde ou un hétéroaromate, tout particulièrement l'acétone.

4. Solution selon une ou plusieurs des revendications 1 à 3, **caractérisée en ce que** la fraction du au moins un solvant organique atteint 20 à 65 % en poids, tout particulièrement 30 à 60 % en pods, respectivement par rapport au poids total de tous les solvants.

5. Solution selon une ou plusieurs des revendications 1 à 4, **caractérisée en ce qu'**elle contient un éther de cellulose non ionique, de préférence l'hydroxyéthylcellulose (HEC), la méthylhydroxyéthylcellulose (MHEC), l'hydroxypropylcellulose (HPC) ou la méthlhycroxypropylcellulose (MHPC).

6. Utilisation de la solution de cellulose ou d'éther de cellulose selon une ou plusieurs des revendications 1 à 5 sous forme de pâte pour décapage de couches de colorants sur du bois, du métal ou d'autres matériaux de support.

7. Utilisation de la solution de cellulose ou d'éther de cellulose selon une ou plusieurs des revendications 1 à 5 sous forme de milieu réactionnel, dans lequel la cellulose ou l'éther de cellulose est chimiquement modifié(e), en particulier éthérifié et/ou estérifié.

8. Utilisation de la solution de cellulose ou d'éther de cellulose selon une ou plusieurs des revendications 1 à 5 pour la fabrication de corps moulés de cellulose, en particulier par précipitation dans un excès de solvant organique.
